# EUROPEAN PATENT SPECIFICATION

(11) **EP 2 112 415 B1**
(45) Date of publication and mention of the grant of the patent: **16.01.2013**
(21) Application number: 08425278.2
(22) Date of filing: 22.04.2008
(51) Int. Cl.: B29C 45/14, F16L 25/00

(54) **An end connector of a corrugated tube, produced by co-moulding**
Mittels gemeinsamer Formung hergestellter Endverbinder eines Wellrohres
Un connecteur fin d'un tube ondulé, produit par co-moulage

(43) Date of publication of application: 28.10.2009
(73) Proprietor: A.E.C. S.R.L., 10156 Torino (IT)
(72) Inventor: Folcarelli, Alberto, I-10131 Torino (IT); Bertoldo, Walter, 10141 Torino (IT)
(74) Representative: Vanzini, Christian

(56) References cited:
- EP-A- 0 154 926
- EP-A- 0 384 003
- DE-B3- 10 348 824
- GB-A- 2 292 433

## Description

The present invention relates to an end connector of a corrugated tube made of plastics material, comprising:
a tubular body co-moulded onto an end of the corrugated tube and having a connection portion arranged outside the corrugated tube and shaped for connection to an external component, and
a tubular insert which is made of plastics material and is partially incorporated in the body and which comprises a stem portion extending inside the corrugated tube and a flange portion which is in abutment with the end of the corrugated tube.

Corrugated tubes are used, for example, in the production of vehicle front and rear screen-washing systems and the like and serve to interconnect various components of such systems such as pumps, nozzles and reservoirs. And end connector according to the preamble of claim 1 is disclosed by EP 0 154 926.

The end connector according to the invention is **characterized in that** the body is elastomeric
and has an anchorage portion arranged inside the corrugated tube so as to fill grooves of the corrugated wall thereof, and in that
the stem portion comprises a proximal anchorage zone which is provided with lateral passages, in the region of which zone the stem portion of the insert is attached to the corrugated tube by means of the anchorage portion of the elastomeric body.

A preferred embodiment of the invention is defined in the dependent claim.

A further subject of the invention is a method of manufacturing an end connector of a corrugated tube, comprising the following steps:
providing a corrugated tube made of plastics material,
providing a tubular insert made of plastics material and comprising a stem portion and a flange portion,
providing a mould comprising an inner portion which has a needle-like configuration and which can be inserted partially in the corrugated tube and an outer portion which can be closed as a shell around an end of the corrugated tube,
inserting the tubular insert in the corrugated tube in a manner such as to bring the flange portion of the tubular insert into abutment with the end of the corrugated tube, the stem portion of the insert being substantially in contact with the corrugated wall of the corrugated tube,
inserting the inner portion of the mould in the corrugated tube and closing the outer portion of the mould around the end of the corrugated tube,
injecting an elastomeric material between the outer portion and the inner portion of the mould,
wherein the outer portion and the inner portion of the mould confer a predetermined profile on the elastomeric material remaining outside the corrugated tube so as to form, respectively, an internal duct and an external surface of a connection portion of the end connector, which connection portion is arranged outside the corrugated tube, said method being characterized in that the stem portion of the insert comprises a proximal zone provided with lateral passages which also extend through the flange portion of the tubular insert, in that the inner portion (IM) of the method is inserted in the corrugated tube (1) until a distal section of the inner portion is brought into engagement inside a distal zone of the stem portion of the insert, and in that the elastomeric material also penetrates into the interior of the corrugated tube through the lateral passages in the tubular insert, thus filling grooves of the corrugated wall of the corrugated tube which are in communication with the lateral passages, and stopping at the level of the distal portion of the tubular insert.

A preferred but non-limiting embodiment of the invention will now be described with reference to the appended drawings in which:
Figure 1 is an elevational view of a corrugated tube provided with an end connector according to the invention,
Figure 2 is a section through the tube, taken on the line II-II of Figure 1,
Figure 3 is an elevational view of the tube of Figure 1 rotated through 90 degrees relative to the longitudinal axis of the tube,
Figure 4 is a section through the tube, taken on the line IV-IV of Figure 3,
Figure 5 is a perspective view of an insert of the end connector of the tube of Figure 1, and
Figure 6 is a partially sectioned, schematic view showing a step in the manufacture of the end connector of the tube of Figure 1.

The drawings show, in general, an end portion of a corrugated tube made of plastics material and generally indicated 1. The tube 1 comprises a corrugated wall 2 which defines a plurality of annular grooves 3 arranged in succession along the tube and facing the interior thereof.

In the region of the end 4 of the tube shown in the drawings there is an end connector, generally indicated 10, suitable for connecting the tube 1 to an external component (not shown). The end connector 10 comprises a tubular elastomeric body 11 produced by the co-moulding of an elastomeric material onto the end 4 of the corrugated tube 1.

The elastomeric body 11 is constituted by a connection portion 12 which is arranged outside the corrugated tube 1 and by an anchorage portion 13 which is arranged inside the corrugated tube 1 so as to fill some grooves 3 of the corrugated wall 2 thereof. The connection portion 12 has an internal duct 14 which is shaped for a leaktight connection between the connector 10 to the above-mentioned external component. The profile of the internal duct 14 is established at the design stage, according to the profile of the external component to which the tube 1 is to be connected. The outside diameter of the connection portion 12 is advantageously the same as the outside diameter of the corrugated tube 1 so as to produce an element with uniform transverse dimensions, thus avoiding any dimensional interference in the regions through which the tube must pass during its installation.

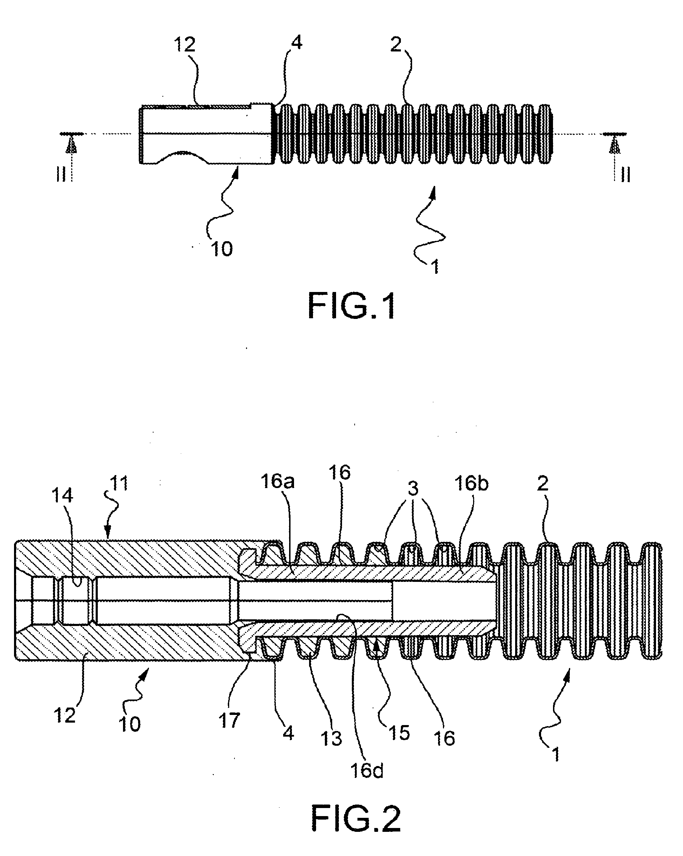

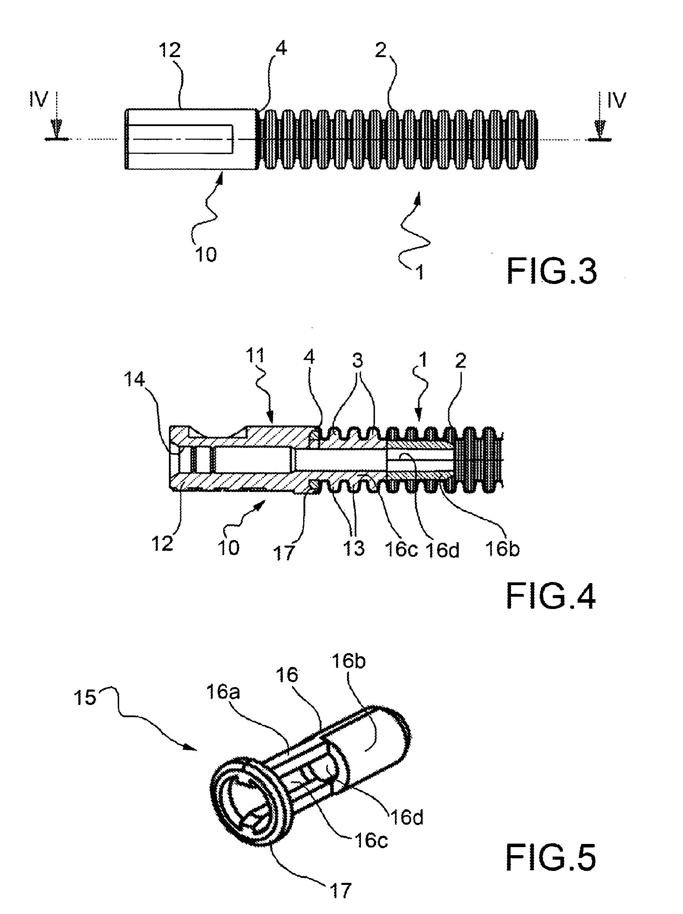

The end connector 10 further comprises a tubular insert 15 which is made of plastics material and is partially incorporated in the elastomeric body 11. The insert 15 comprises a stem portion 16 extending inside the corrugated tube 1 and a flange portion 17 which is arranged at one end of the stem portion 16 and is in abutment with the end 4 of the corrugated tube 1. With reference in particular to Figure 5 which shows the insert 15 alone, it can be seen that the stem portion 16 of the insert comprises a proximal zone 16a and a distal zone 16b. In the region of the proximal zone 16a, hereinafter defined as the anchorage zone, the side wall of the stem portion 16 has lateral passages or holes 16c which face the internal duct 16d of the insert 15. As can be seen in Figure 2, the internal duct 16d of the insert 15 is slightly flared. In the region of the distal zone 16b of the stem portion 16 of the insert 15, hereinafter defined as the sealing zone, the lateral wall of the stem portion 16 is substantially continuous, that is free of lateral openings. The insert 15 as a whole is arranged in the tube 1 in a manner such that the side wall of the stem portion 16 is substantially in contact with the wall 2 of the corrugated tube 1. In the sealing zone 16b the contact affects the entire periphery of the cross-section of the lateral wall of the stem portion 16. The grooves 3 of the wall 2 of the tube 1 are thus isolated from one another (in a leaktight manner) in the sealing zone 16b whereas, in the anchorage zone 16a, the grooves 3 are connected to (in communication with) one another and to the internal duct 16d of the insert 15, by means of the lateral passages 16c. As can clearly be seen in Figure 5, the lateral passages 16c also extend through the flange portion 17 of the insert 15. As shown in Figure 4, the anchorage portion 13 of the elastomeric body 11 extends from the connection portion 12 of the body 11 so as to occupy the lateral passages 16c and to fill the grooves 3 of the corrugated wall 2 of the corrugated tube 1 that are in communication with the passages 16c, terminating at the level of the distal zone 16b of the stem portion 16 of the insert 15. In the embodiment illustrated, in the region of the anchorage zone 16a, the lateral wall of the stem portion 16 is reduced to a series of bridges which attach the flange portion 17 to the sealing zone 16b of the stem 16. However, the specific shape of the lateral passages 16c and of the sealing zone 16b of the insert 15 is not essential for the purposes of the invention, provided that it ensures controlled penetration of the elastomeric material between the tubular insert 15 and the corrugated wall 2 of the tube 1.

In the anchorage zone 16a, the stem portion 16 of the insert 15 is therefore attached to the corrugated tube 1 by means of the anchorage portion 13 of the elastomeric body 11. This attachment is achieved by mechanical anchorage, utilizing the undercuts defined by the grooves 3 of the corrugated wall 2 of the tube 1, and by chemical anchorage, by the selection of the materials of the tube 1, of the elastomeric body 11, and of the insert 15 in a manner such as to achieve chemical adhesion between them. The elastomeric material thus creates a single body with the tube 1 and with the insert 15.

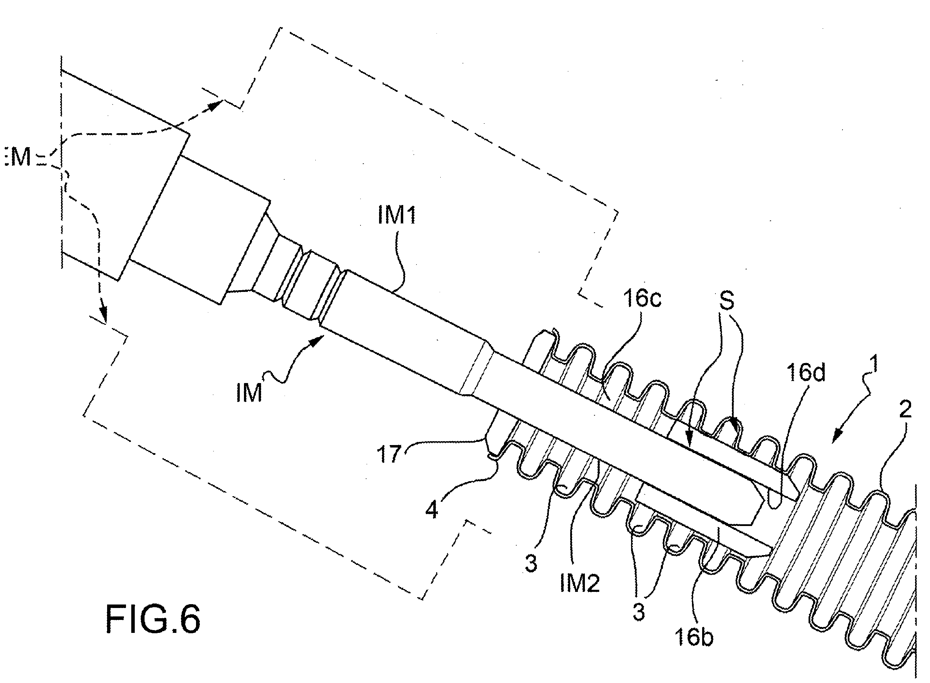

Figure 6 shows how the elastomeric body 11 can be co-moulded onto the end 4 of the tube 1. For this purpose a mould is used which comprises a needle-shaped inner portion IM that can be inserted partially in the corrugated tube 1 and an outer portion EM (indicated schematically by a broken line) that can be closed as a shell around the end 4 of the tube 1. The inner portion IM comprises a proximal section IM1 the lateral surface of which is shaped so as to impart the desired profile to the internal duct 14 of the connection portion 12 of the elastomeric body 11 and a distal section IM2 which can engage inside the sealing zone 16b of the stem portion 16 of the insert 15, thus closing the internal duct 16d of the insert 15 in a leaktight manner. The outer portion EM of the mould, on the other hand, is shaped so as to impart the desired profile to the external surface of the connection portion 12 of the elastomeric body 11.

Basically, the manufacture of the end connector 10 comprises, initially, the insertion of the insert 15 in the corrugated tube 1 until the flange portion 17 of the insert 15 is brought into abutment with the end 4 of the tube 1. The inner portion IM of the mould is then inserted in the corrugated tube 1 until the distal section IM2 of the inner portion IM is brought into engagement with the sealing zone 16b of the stem portion 16 of the insert 15 and the outer portion EM of the mould is closed around the end 4 of the tube. The elastomeric material is then injected in conventional manner between the outer portion EM and the inner portion IM of the mould and also penetrates into the interior of the corrugated tube 1 through the portions of the lateral passages 16c which extend through the flange portion 17 of the insert 15, thus filling the lateral passages 16c and the grooves 3 of the corrugated wall 2 that are in communication therewith. The penetration of the elastomeric material is stopped by the sealing zone 16b of the stem portion 16 of the insert 15 by virtue of the seal S formed by the sealing zone 16b with the distal portion IM2 of the inner portion IM of the mould on one side and with the corrugated wall 2 of the corrugated tube 1 on the other side.

## Claims

1. An end connector (10) of a corrugated tube (1) made of plastics material, comprising:
a tubular body (11) co-moulded onto an end (4) of the corrugated tube (1) and having a connection portion (12) arranged outside the corrugated tube (1) and shaped for connection to an external component, and
a tubular insert (15) which is made of plastics material and is partially incorporated in the body (11) and which comprises a stem portion (16) extending inside the corrugated tube (1) and a flange portion (17) which is in abutment with the end of the corrugated tube (1),
said end connector being **characterized in that** said body (11) is elastomeric and has an anchorage portion (13) arranged inside the corrugated tube (1) so as to fill grooves (3) of the corrugated wall (2) thereof, and **in that**
the stem portion comprises a proximal anchorage zone (16a) provided with lateral passages (16c), in the region of which zone the stem portion (16) of the insert (15) is attached to the corrugated tube (1) by means of the anchorage portion (13) of the elastomeric body (11).

2. A connector according to Claim 1 in which the lateral passages of the anchorage zone also extend through the flange portion (17) of the tubular insert (15), and in which the anchorage portion (13) of the elastomeric body (11) extends from the connection portion (12) of the elastomeric body so as to occupy the lateral passages and to fill the grooves (3) of the corrugated wall (2) of the corrugated tube (1) that are in communication therewith, terminating at the level of a distal zone (16b) of the stem portion (16) of the tubular insert (15).

3. A method of manufacturing an end connector (10) of a corrugated tube (1), comprising the following steps:
providing a corrugated tube (1) made of plastics material,
providing a tubular insert (15) made of plastics material and comprising a stem portion (16) and a flange portion (17),
providing a mould comprising an inner portion (IM) which has a needle-like configuration and which can be inserted partially in the corrugated tube (1) and an outer portion (EM) which can be closed as a shell around an end (4) of the corrugated tube (1),
inserting the tubular insert (15) in the corrugated tube (1) in a manner such as to bring the flange portion (17) of the tubular insert (15) into abutment with the end of the corrugated tube (1), the stem portion (16) of the insert (15) being substantially in contact with the corrugated wall (2) of the corrugated tube (1),
inserting the inner portion (IM) of the mould in the corrugated tube (1) and closing the outer portion (EM) of the mould around the end (4) of the corrugated tube (1),
injecting an elastomeric material between the outer portion (EM) and the inner portion (IM) of the mould,
wherein the outer portion (EM) and the inner portion (IM) of the mould confer a predetermined profile on the elastomeric material remaining outside the corrugated tube (1) so as to form, respectively, an internal duct (14) and an external surface of a connection portion (12) of the end connector (10) which connection portion is arranged outside the corrugated tube (1),
said method being **characterized in that**
the stem portion of the insert comprises a proximal zone (16a) provided with lateral passages (16c) which also extend through the flange portion (17) of the tubular insert (15), **in that**
the inner portion (IM) of the mould is inserted in the corrugated tube (1) until a distal section (IM2) of the inner portion is brought into engagement inside a distal zone (16b) of the stem portion (16) of the insert (15), and **in that**
the elastomeric material also penetrates into the interior of the corrugated tube (1) through the lateral passages (16c) in the insert (15), thus filling grooves (3) of the corrugated wall (2) which are in communication with the lateral passages, and stopping at the level of the distal portion (16b) of the tubular insert (15).

## Patentansprüche

1. Ein Endverbinder (10) eines geriffelten Rohrs (1), das aus Kunststoffmaterial hergestellt ist, der folgende Merkmale aufweist:
einen röhrenförmigen Körper (11), der im Verbund gegossen ist auf ein Ende (4) des geriffelten Rohrs (1) und einen Verbindungsabschnitt (12) aufweist, der außerhalb des geriffelten Rohrs (1) angeordnet ist und für eine Verbindung mit einer externen Komponente geformt ist, und
einen röhrenförmigen Einsatz (15), der aus Kunststoffmaterial hergestellt ist und teilweise in den Körper (11) integriert ist, und der einen Schaftabschnitt (16) aufweist, der sich in dem geriffelten Rohr (1) erstreckt, und einen Flanschabschnitt (17), der an das Ende des geriffelten Rohrs (1) anstößt,
wobei der Endverbinder **dadurch gekennzeichnet ist, dass** der Körper (11) elastisch ist und einen Ankerabschnitt (13) aufweist, der in dem geriffelten Rohr (1) angeordnet ist, um Rillen (3) der geriffelten Wand (2) desselben zu füllen, und dass
der Schaftabschnitt eine nahe Ankerzone (16a) aufweist, die mit lateralen Durchgängen (16c) versehen ist, wobei in der Region der Zone der Schaftabschnitt (16) des Einsatzes (15) durch den Ankerabschnitt (13) des elastischen Körpers (11) an dem geriffelten Rohr (1) befestigt ist.

2. Ein Verbinder gemäß Anspruch 1, bei dem die lateralen Durchgänge der Ankerzone sich auch durch den Flanschabschnitt (17) des röhrenförmigen Einsatzes (15) erstrecken, und bei dem der Ankerabschnitt (13) des elastischen Körpers (11) sich von dem Verbindungsabschnitt (12) des elastischen Körpers erstreckt, um die lateralen Durchgänge zu besetzen und die Rillen (3) der geriffelten Wand (2) des geriffelten Rohrs (1) zu füllen, die in Kommunikation mit demselben sind, und an der Ebene einer distalen Zone (16b) des Schaftabschnitts (16) des röhrenförmigen Einsatzes (15) endet.

3. Ein Verfahren zum Herstellen eines Endverbinders (10) eines geriffelten Rohrs (11), das die folgenden Schritte aufweist:
Bereitstellen eines geriffelten Rohrs (1), das aus Kunststoffmaterial hergestellt ist,
Bereitstellen eines röhrenförmigen Einsatzes (15), der aus Kunststoffmaterial hergestellt ist und einen Schaftabschnitt (16) und einen Flanschabschnitt (17) aufweist,
Bereitstellen einer Form, die einen inneren Abschnitt (IM), der eine nadelartige Konfiguration aufweist und der teilweise in das geriffelte Rohr (1) eingefügt werden kann, und einen äußeren Abschnitt (EM) aufweist, der als eine Hülle um ein Ende (4) des geriffelten Rohrs (1) geschlossen werden kann,
Einfügen des röhrenförmigen Einsatzes (15) in das geriffelte Rohr (1) auf eine Weise, um den Flanschabschnitt (17) des röhrenförmigen Einsatzes (15) in Anschlag zu bringen mit dem Ende des geriffelten Rohrs (1), wobei der Schaftabschnitt (16) des Einsatzes (15) im Wesentlichen in Kontakt ist mit der geriffelten Wand (2) des geriffelten Rohrs (1),
Einfügen des inneren Abschnitts (IM) der Form in das geriffelte Rohr (1) und Schließen des äußeren Abschnitts (EM) der Form um das Ende (4) des geriffelten Rohrs (1) herum,
Injizieren eines elastischen Materials zwischen den äußeren Abschnitt (EM) und den inneren Abschnitt (IM) der Form,
wobei der äußere Abschnitt (EM) und der innere Abschnitt (IM) der Form ein vorbestimmtes Profil auf das elastische Material übertragen, das außerhalb des geriffelten Rohrs (1) verbleibt, um jeweils einen internen Kanal (14) und eine externe Oberfläche eines Verbindungsabschnitts (12) des Endverbinders (10) zu bilden, wobei dieser Verbindungsabschnitt außerhalb des geriffelten Rohrs (1) angeordnet ist,
wobei das Verfahren **dadurch gekennzeichnet ist, dass**
der Schaftabschnitt des Einsatzes eine nahe Zone (16a) aufweist, die mit lateralen Durchgängen (16c) versehen ist, die sich auch durch den Flanschabschnitt (17) des röhrenförmigen Einsatzes (15) erstrecken, dass
der innere Abschnitt (IM) der Form in das geriffelte Rohr (1) eingefügt wird, bis ein distaler Abschnitt (IM2) des geriffelten Abschnitts in Eingriffnahme gebracht wird in einer distalen Zone (16b) des Schaftabschnitts (16) des Einsatzes (15), und dass
das elastische Material durch die lateralen Durchgänge (16c) in dem Einsatz (15) auch in das Innere des geriffelten Rohrs (1) dringt, wodurch Rillen (3) der geriffelten Wand (2) gefüllt werden, die in Kommunikation mit den lateralen Durchgängen sind, und an der Ebene des distalen Abschnitts (16b) des röhrenförmigen Einsatzes (15) stoppt.

## Revendications

1. Connecteur terminal (10) d'un tube ondulé (1) réalisé à partir d'une matière plastique, comprenant :
un corps tubulaire (11) co-moulé sur une extrémité (4) du tube ondulé (1) et ayant une partie de raccordement (12) agencée à l'extérieur du tube ondulé (1) et formée pour le raccordement à un composant externe, et
un insert tubulaire (15) qui est réalisé à partir d'une matière plastique et est partiellement incorporé dans le corps (11) et qui comprend une partie de tige (16) s'étendant à l'intérieur du tube ondulé (1) et une partie de rebord (17) qui est en butée avec l'extrémité du tube ondulé (1),
ledit connecteur terminal étant **caractérisé en ce que** ledit corps (11) est élastomère et a une partie d'ancrage (13) agencée à l'intérieur du tube ondulé (1) afin de remplir des rainures (3) de sa paroi ondulée (2), et **en ce que**
la partie de tige comprend une zone d'ancrage proximale (16a) prévue avec des passages latéraux (16c), dans les régions de laquelle zone, la partie de tige (16) de l'insert (15) est fixée au tube ondulé (1) au moyen de la partie d'ancrage (13) du corps élastomère (11).

2. Connecteur selon la revendication 1, dans lequel les passages latéraux de la zone d'ancrage s'étendent également à travers la partie de rebord (17) de l'insert tubulaire (15), et dans lequel la partie d'ancrage (13) du corps élastomère (11) s'étend à partir de la partie de raccordement (12) du corps élastomère afin d'occuper les passages latéraux et de remplir les rainures (3) de la paroi ondulée (2) du tube ondulé (1) qui sont en communication avec ce dernier, se terminant au niveau d'une zone distale (16b) de la partie de tige (16) de l'insert tubulaire (15) .

3. Procédé pour fabriquer un connecteur terminal (10) d'un tube ondulé (1), comprenant les étapes suivantes consistant à :
prévoir un tube ondulé (1) réalisé à partir d'une matière plastique,
prévoir un insert tubulaire (15) réalisé à partir d'une matière plastique et comprenant une partie de tige (16) et une partie de rebord (17),
prévoir un moule comprenant une partie interne (IM) qui a une configuration en forme d'aiguille et qui peut être inséré partiellement dans le tube ondulé (1) et une partie externe (EM) qui peut être fermée comme une coque autour d'une extrémité (4) du tube ondulé (1),
insérer l'insert tubulaire (15) dans le tube ondulé (1) afin d'amener la partie de rebord (17) de l'insert tubulaire (15) en butée avec l'extrémité du tube ondulé (1), la partie de tige (16) de l'insert (15) étant sensiblement en contact avec la paroi ondulée (2) du tube ondulé (1),
insérer la partie interne (IM) du moule dans le tube ondulé (1) et fermer la partie externe (EM) du moule autour de l'extrémité (4) du tube ondulé (1),
injecter une matière élastomère entre la partie externe (EM) et la partie interne (IM) du moule,
dans lequel la partie externe (EM) et la partie interne (IM) du moule confèrent un profil prédéterminé sur la matière élastomère restant à l'extérieur du tube ondulé (1) afin de former respectivement, un conduit interne (14) et une surface externe d'une partie de raccordement (12) du connecteur terminal (10), laquelle partie de raccordement est agencée à l'extérieur du tube ondulé (1),
ledit procédé étant **caractérisé en ce que**
la partie de tige de l'insert comprend une zone proximale (16a) prévue avec des passages latéraux (16c) qui s'étendent également à travers la partie de rebord (17) de l'insert tubulaire (15), **en ce que**
la partie interne (IM) du moule est insérée dans le tube ondulé (1) jusqu'à ce qu'une section distale (IM2) de la partie interne est amenée en mise en prise à l'intérieur d'une zone distale (16b) de la partie de tige (16) de l'insert (15), et **en ce que**
la matière élastomère pénètre également à l'intérieur du tube ondulé (1) à travers les passages latéraux (16c) dans l'insert (15), remplissant ainsi des rainures (3) de la paroi ondulée (2) qui sont en communication avec les passages latéraux, et s'arrêtant au niveau de la partie distale (16b) de l'insert tubulaire (15).
